# EUROPEAN PATENT APPLICATION

(11) **EP 2 623 459 A1**
(43) Date of publication of application: **07.08.2013**
(21) Application number: 10857683.6
(22) Date of filing: 29.09.2010
(51) Int. Cl.: C01B 25/45, H01M 4/04, C01B 31/04

(54) **LITHIUM IRON PHOSPHATE COMPOSITE MATERIAL, PRODUCTION METHOD AND USE THEREOF**

(71) Applicant: Ocean's King Lighting Science&Technology Co., Ltd., Guangdong 518054 (CN)
(72) Inventor: ZHOU, Mingjie, Guangdong 518054 (CN); PAN, Jun, Guangdong 518054 (CN); WANG, Yaobing, Guangdong 518054 (CN)
(74) Representative: Crowhurst, Charlotte Waveney
(86) International application number: PCT/CN2010/077468
(87) International publication number: WO 2012/040920

(57) **Abstract**

Provided are a lithium iron phosphate composite material, the production method thereof and the use thereof. The lithium iron phosphate composite material has a micro-size particle structure, which contains nano-size grains of lithium iron phosphate and graphene inside, and bears nano-carbon particulates outside. The lithium iron phosphate composite material has the properties of high conductivity, high-rate charge/discharge performance and high tap density. The production method comprises: preparing an iron salt mixed solution according to the mole ratio of P : Fe =1:1; adding the above solution into an organic carbon source aqueous solution, followed by mixing and reacting, so as to obtain nano-iron phosphate covered with organic carbon source; adding the above nano-iron phosphate covered with organic carbon source and a lithium source compound into an aqueous solution of graphene oxide, agitating, mixing, and then spray drying, so as to obtain a precursor of lithium iron phosphate composite material; calcinating said precursor in a reduction atmosphere and cooling naturally, so as to obtain said lithium iron phosphate composite material. The material is used for lithium ion battery or positive electrode material.

## Description

### Technical Field

The present invention belongs to the technical field of battery cathode materials, and, in particular, relates to a lithium iron phosphate composite material, a method for preparing the same and use of the same.

### Background Art

Lithium ion batteries are a new type of environment-friendly rechargeable batteries developed in 1990s. Due to their advantages such as high operating voltage, small size, light weight, high specific energy, no memory effect, no pollution, low self-discharge, long cycle life, etc., lithium ion batteries are considered an ideal energy source for the development in the 21 st century, and are widely used in communication, transportation, motor vehicles, military, laptop computers, household appliances, etc. The currently used lithium iron phosphate batteries have the advantages such as low cost, high-temperature resistance, good cycling performance, high specific capacity, flat charge/discharge voltage curve, etc., and have great application potential. However, the lithium iron phosphate composite materials currently used in the lithium iron phosphate batteries have the following disadvantages: low electric conductivity, low tap density, and low charge/discharge rate.

### Summary

In view of the above, an embodiment of the present invention provides a lithium iron phosphate composite material to solve the problems of the cathode materials for the currently used batteries, such as low electric conductivity, low charge/discharge rate, and low tap density.

A lithium iron phosphate composite material has a micro-porous granular structure, wherein the interior of the micro-porous granular structure comprises lithium iron phosphate nanocrystallines and graphene, and the exterior of the micro-porous granular structure comprises a coating of carbon nanoparticles.

A method for preparing a lithium iron phosphate composite material comprises the steps of:
preparing a mixed solution of a ferric salt wherein molar ratio of phosphor element to iron element is 1:1;
adding the mixed solution to an aqueous solution of an organic carbon source, and mixing to react in a water bath at a temperature of 20-80 °C for 0.5-5 hours, while keeping pH of the mixed reaction system at 1-7, to give nanometer ferric phosphate coated by the organic carbon source;
adding the nanometer ferric phosphate coated by the organic carbon source and a source compound of lithium to an aqueous solution of graphene oxide, stirring to mix, then spray-drying, calcinating at 400-1000 °C in a reductive atmosphere for 1-24 hours, and naturally cooling down to obtain the lithium iron phosphate composite material.

Furthermore, an embodiment of the present invention also provides use of the lithium iron phosphate composite material in a lithium ion battery or in a cathode material.

Due to strong electric conductivity of carbon nanoparticles and graphene, the lithium iron phosphate composite material of the present invention has a high conductivity and accordingly has a high charge/discharge rate. In addition, due to the dual-particle structure comprising lithium iron phosphate microparticles and lithium iron phosphate nanoparticles, the lithium iron phosphate composite material of the present invention has relatively high tap density.

### Brief Description of the Figures

Figure 1 shows a scanning electron microscope picture (× 1000) of the lithium iron phosphate composite material provided in an Example of the present invention;
Figure 2 shows a scanning electron microscope picture (× 4000) of the lithium iron phosphate composite material provided in an Example of the present invention;
Figure 3 shows an X-ray diffraction diagram of the lithium iron phosphate composite material provided in an Example of the present invention; and
Figure 4 shows a diagram of the test results of a battery made from the lithium iron phosphate composite material provided in an Example of the present invention.

### Specific Embodiments

In order to make the objects, the technical solutions and the advantages of the present invention more apparent, the present invention will be described below in further detail in combination with the Figures and embodiments. It should be understood that the specific embodiments described herein are only for illustrating the present invention, but are not intended to limit the present invention.

An embodiment of the present invention provides a lithium iron phosphate composite material having a micro-meter granular structure, wherein the interior of the micro-meter granular structure comprises lithium iron phosphate nanocrystallines and graphene, and the exterior of the micro-meter granular structure comprises a coating of carbon nanoparticles.

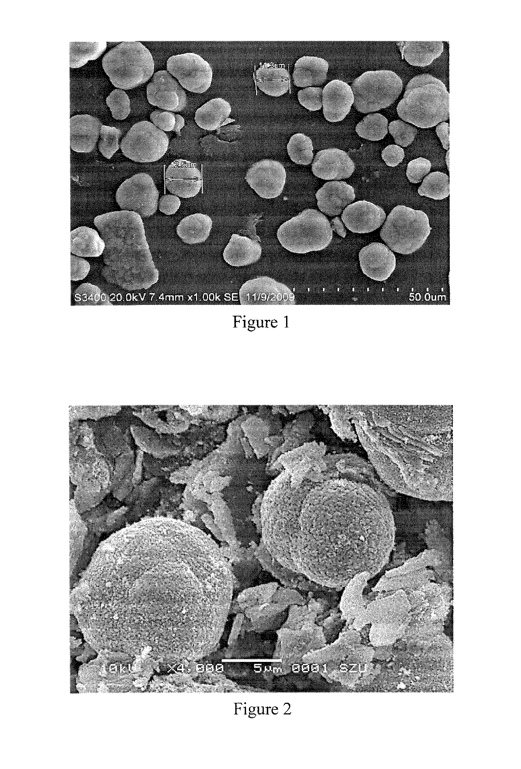

The lithium iron phosphate composite material of the present invention has a micro-meter granular structure. Specifically, the micro-meter granular structure may be lithium iron phosphate microparticles. The lithium iron phosphate microparticles may be basic units constituting the cathode material of the present invention. The lithium iron phosphate microparticles may have a particle size preferably in the range of 1-20 micrometers. As shown in the electron microscope pictures of Figures 1 and 2, the lithium iron phosphate microparticles may have various morphologies, such as ellipsoidal and spherical, preferably spherical, including regular or irregular spherical.

The interior of the micro-meter granular structure may comprise graphene and lithium iron phosphate nanocrystallines, and the lithium iron phosphate nanocrystallines may be coated by carbon nanoparticles, so that the exterior of the micrometer granular structure may comprise a coating of carbon particles. The lithium iron phosphate nanocrystallines may have a particle size of less than 100 nanometers. Graphene and the lithium iron phosphate nanocrystallines are mixed with each other. In particular, the lithium iron phosphate nanocrystallines may adhere to the surface of graphene. In a specific embodiment, wrinkles are formed at the surface of graphene, and the wrinkles between graphenes form a space accommodating most of the lithium iron phosphate nanocrystallines. C is an excellent conductive material, so that the lithium iron phosphate composite material of the present invention has a relatively high conductivity. In addition, graphene is also an excellent conductive material, which further greatly improves the conductivity of the lithium iron phosphate composite material of the present invention. Due to the wrinkles at the surface of graphene, the gap between the lithium iron phosphate nanocrystallines which adhere to the surface of graphene becomes narrower and certain lithium iron phosphate nanocrystallines may contact with each other, which significantly improves the conductivity of the lithium iron phosphate composite material of the present invention and significantly improves the charge/discharge performance of the lithium iron phosphate composite material.

Generally, the lithium iron phosphate composite material of the present invention comprises two types of particles: lithium iron phosphate microparticles, as well as lithium iron phosphate nanocrystallines in the interior of the lithium iron phosphate microparticles. These two types of particles are formed by two granulation steps during the preparation process. The tight combination between the microparticles as well as between the nanoparticles significantly increases the tap density of the lithium iron phosphate composite material of the present invention.

Graphene in the lithium iron phosphate composite material of the present invention is a molecular graphene monolayer or an aggregate of molecular graphene monolayers, preferably an aggregate of 2-100 molecular graphene monolayers, and more preferably molecular graphene monolayer. The mass percentage of graphene in the lithium iron phosphate composite material may be 0.1-99%.

An embodiment of the present invention also provides a method for preparing a lithium iron phosphate composite material, which may comprise the following steps.
a) A mixed solution of an iron salt is prepared, wherein molar ratio of phosphor element to iron element is 1:1.

In Step a), the source of iron element used for preparing the mixed solution may be a compound which contains Fe³⁺ (ferric ion), including, but not limited to, ferric oxide, ferric sulfate and ferric citrate; or a compound which contains Fe²⁺ (ferrous ion) and may be oxidized to give Fe³⁺ (ferric ion), such as ferroferric oxide, ferrous sulfate, ferrous ammonium sulfate, ferrous ammonium phosphate, ferrous phosphate, ferrous citrate, ferrous oxide, etc. The type of the oxidizing agent is not restricted, but is preferably one or more of ammonium persulfate, sodium hypochlorite, hydrogen peroxide having a mass percentage concentration of 30%, and sodium percarbonate. The concentration of the oxidizing agent may be 0.1-5 mol/L. An excessive amount of the oxidizing agent may be used to ensure that all the ferrous ions are oxidized to trivalent ferric ions. The source of phosphorus element may be a compound which contains PO₄³⁻, including, but not limited to, phosphoric acid, ammonium dihydrogen phosphate, diammonium hydrogen phosphate, lithium dihydrogen phosphate, ferrous ammonium phosphate, ammonium phosphate, etc.; or phosphorus pentoxide, which may react with water in an aqueous solution to generate phosphoric acid.

The source of iron element used in this step (i.e. a compound containing Fe³⁺ or ferrous ion) may be ionized in a solvent to generate ferric ion or ferrous ion. The concentration of ferric ion or ferrous ion in this step may be 0.1-2.5 mol/L. The source of phosphorus element (i.e. a compound containing PO₄³⁻) may be ionized to generate phosphate ion. The solution of the compound containing PO₄³⁻ may have a mass percentage concentration of 85%. Also can be used are two compounds which may not be ionized to generate ferric ion or ferrous ion or phosphate ion, but may react in a solvent to generating ferric phosphate precipitate, such as a combination of ferric oxide and phosphoric acid. The reaction in this step may be expressed by the following formula:

Fe³⁺ + PO₄³⁻ → FePO₄

In this step, Fe³⁺ and PO₄³⁻ react under stirring to give nanometer precipitation of ferric phosphate, i.e. ferric phosphate nanoparticles. The ferric phosphate nanoparticles may have a particle size of less than 100 nm. This is the first granulation step in the method for preparing the lithium iron phosphate composite material. In this step, the molar ratio of the compound containing Fe³⁺ (ferric ion) and the compound containing PO₄³⁻ (phosphate ion) may be 1:1. Various solvents, preferably water, may be used in this step. The ferric phosphate nanoparticles prepared by reaction in this step have ferric ions at the surface thereof, so that the ferric phosphate nanoparticles have electric charges at the surface thereof, which may initiate polymerization of an organic carbon source at the surface thereof.
b) The above mixed solution is added to an aqueous solution of an organic carbon source, and mixed to react in a water bath at a temperature of 20-80 °C for 0.5-5 hours, while keeping pH of the mixed reaction system at 1-7, to give nanometer ferric phosphate coated by the organic carbon source.

In this step, the organic carbon source includes an organic carbon source which may polymerize at the surface of the ferric phosphate nanoparticles and decompose at a temperature of 400-1000 °C, preferably aniline monomer or a derivative thereof, pyrrole monomer or a derivative thereof, thiophene monomer or a derivative thereof, or the like. After adding the organic carbon source, the oxidation effect of the trivalent ferric ions at the surface of ferric phosphate render the organic carbon source to polymerize at the outer surface of the ferric phosphate nanoparticles while the organic carbon source self-polymerizes, thereby coating, preferably completely coating, the ferric phosphate nanoparticles. After the ferric phosphate nanoparticles are completely coated by the organic carbon source due to the polymerization thereof at the surface of the ferric phosphate nanoparticles, the polymerization will be forced to terminate. Accordingly, there is a limit on the amount of the added organic carbon source; if the amount exceeds such a limit, the excessive organic monomer would remain in the solution without polymerization. For the polymerization of aniline, this limit may be about 35% of the mass of ferric phosphate. The mixed solution obtained in step a) may be pumped into an aqueous solution of the organic carbon source by a peristaltic pump and then pH value of the system may be maintained at 1-7 with an alkaline agent or an acidic agent. The alkaline agent may be selected from a variety of alkaline agents, and may be preferably ammonia, sodium hydroxide, potassium hydroxide, potassium carbonate, potassium bicarbonate, or the like. The acidic agent may be acetic acid, hydrochloric acid, or the like. The temperature of the system may be controlled at 20-80 °C with a water bath. The reaction is stirred for 0.5-5 hours, then for another 0.5-5 hours. In this step, pH value of the reaction system is kept at 1-7. Accordingly, the reaction system is in an acidic environment, under which the organic carbon source is easier to polymerize at the surface of ferric phosphate.
c) The above nanometer ferric phosphate coated by the organic carbon source and a source compound of lithium are added to an aqueous solution of graphene oxide, stirred to mix, and then spray-dried to give a precursor of the lithium iron phosphate composite material.

In step c), graphene oxide is prepared according to an improved Hummers method (J. Am. Chem. Soc., 1958, 80(6), 1339-1339, Preparation of Graphitic Oxide). In this step, by adding graphene oxide, an organic reaction occurs between the functional group in the organic carbon source coating ferric phosphate and the functional group at the surface of graphene oxide so that the organic carbon source and graphene oxide are connected together. The source compound of lithium includes, but is not limited to, one or more of lithium oxide, lithium hydroxide, lithium carbonate, lithium acetate, lithium phosphate, lithium dihydrogen phosphate, lithium fluoride, and the like. The lithium compound may be ionized in water to generate lithium ion.

The concentration of ferric phosphate nanoparticles in the solution after adding an organic monomer may be 0.05-1.25 mol/L (the mass of graphene oxide may be 0.1-99 % of the mass of ferric phosphate). The molar ratio of the source compound of lithium and ferric phosphate may be 1:1. The mixed solution may be stirred to mix homogeneously. In the mixed solution prepared in this step, ferric phosphate nanoparticles are coated by the organic carbon source; the organic carbon source and graphene oxide are combined together; and lithium ions are distributed in the structure of ferric phosphate nanoparticles coated by the organic carbon source.

In step c), there is no requirement on the equipment for spray-drying, which may be any kind of equipment for spray-drying. The specific process for spray-drying may comprise: continuous stirring; feeding rate of 0.5-5 L/min, feeding temperature of 150-250 °C, and discharging temperature of 65-85 °C. During the spray-drying, droplets of the mixed solution obtained in c) are firstly sprayed out. The droplets are instantaneously heated to a high temperature, so that water is evaporated, and the volume becomes smaller, which leads to aggregation of multiple ferric phosphate nanoparticles to form ferric phosphate base-particles with a larger particle size. The ferric phosphate base-particles are formed by aggregation of certain number of ferric phosphate nanoparticles coated by the organic carbon source. This is the second granulation step in the method for preparing the lithium iron phosphate composite material of the present invention. By conducting two granulation steps in the embodiment of the present invention, the tap density of the lithium iron phosphate composite material is significantly increased.
d) The precursor of the lithium iron phosphate composite material is calcinated at 400-1000 °C for 1-24 hours in a reductive atmosphere to give the lithium iron phosphate composite material.

In step d), the reductive atmosphere may be any reductive atmosphere, preferably, for example, 10% nitrogen and 90% hydrogen, 20% argon and 80% carbon monoxide, or the like, and the rate of temperature increase may be 2-10 °C/min. After calcination at a high temperature, the product is naturally cooled down to crystallize to give the lithium iron phosphate composite material of the present invention.

By calcinating in a reductive atmosphere, the trivalent ferric ions in the precursor of the lithium iron phosphate composite material are reduced to divalent ferrous ions, so that ferrous phosphate lattices are formed, while lithium ions diffuse into the ferrous phosphate lattices to form lithium iron phosphate nanocrystallines. After calcinating at a high temperature, the organic carbon source decomposes to elemental C and a gas, so that the lithium iron phosphate nanocrystallines are coated by carbon nanoparticles. In addition, graphene oxide is reduced to graphene, so that the conductivity of the lithium iron phosphate composite material is significantly improved due to the coating by carbon nanoparticles and the doping by graphene. Meanwhile, the organic carbon source decompose to generate a gas during the calcination, which diffuse to the exterior of the lithium iron phosphate microparticles, leading to formation of certain channels, and formation of certain number of micropores at the outer surface of the lithium iron phosphate microparticles, which significantly improves the charge/discharge performance of the lithium iron phosphate composite material.

Furthermore, an embodiment of the present invention also provides use of the lithium iron phosphate composite material in a lithium ion battery or in a cathode material.

In the lithium iron phosphate composite material of the present invention, the lithium iron phosphate nanoparticles are coated by carbon nanoparticles, so that the lithium iron phosphate composite material of the present invention has a relatively high conductivity. In addition, graphene is also an excellent conductive material, which significantly improves the conductivity of the lithium iron phosphate composite material of the present invention. Generally, the lithium iron phosphate composite material of the present invention comprises two types of particles: lithium iron phosphate nanocrystallines and lithium iron phosphate microparticles. These two types of particles are formed by two granulation steps during the preparation process, so that the tap density of the lithium iron phosphate composite material of the present invention is significantly increased.

In the method for preparing the lithium iron phosphate composite material of the present invention, by the oxidation effect of the trivalent ferric ions, the ferric phosphate nanoparticles may be completely coated by the organic carbon source, thereby ensuring that the lithium iron phosphate nanocrystallines in the lithium iron phosphate composite material are coated by carbon nanoparticles, which realizes significant improvement of the conductivity of the lithium iron phosphate composite material. By conducting two granulation steps, the tap density of the lithium iron phosphate composite material of the present invention is significantly increased. The preparation method of the embodiment of the present invention is simple, easy to operate, low in cost, and suitable for industrial scale production.

In the following, the specific embodiments of the present invention are described in detail in combination with the Examples and Figures.

### Example 1

The method for preparing a lithium iron phosphate composite material of the present invention comprises the following specific steps.
1) A solution containing ferric phosphate is prepared.
   A 1 mol/L solution of ferric nitrate and a solution of phosphoric acid having a weight percentage concentration of 85% are mixed, in a molar ratio of P to Fe of 1:1, to give the mixed solution.
2) 100 ml of 3 mol/L ammonia solution is prepared.
3) 8 g of aniline monomer is adding to 50 ml of deionized water to prepare an aniline solution.
4) Under stirring (e.g. 500 rpm/min), the above solution containing ferric phosphate is pumped into the aniline solution with a peristaltic pump continuously and simultaneously, while controlling pH value of the reaction system at 2.0 (± 0.1) with the above ammonia solution. At a temperature of 20 °C, and controlling the flow rate of the peristaltic pump at 0.45 ml/min, the reaction is carried out for 3 hours, followed by stirring for another 2 hours. The precipitate is centrifuged and washed to give ferric phosphate nanoparticles coated by aniline.
5) An aqueous system of graphene oxide is prepared.
   Graphene oxide is prepared according to an improved Hummers method (J. Am. Chem. Soc., 1958, 80(6), 1339-1339, Preparation of Graphitic Oxide). After preparation of graphene oxide, 10 g of graphene oxide is dissolved in 10 mL of water to form a 1 g/mL aqueous solution of graphene oxide which has a brown color.
6) 0.1 mol of ferric phosphate nanoparticles coated by aniline and the above aqueous solution of graphene oxide are homogeneously mixed (wherein the content of graphene oxide is 0.5 g), wherein the content of ferric phosphate nanoparticles in water is 20%. 10.2 g of LiAc.2H₂O is added to the mixed system, sufficiently and vigorously stirred to mix homogeneously to give a mixed solution.
7) The mixed solution is subjected to spray-drying, wherein the feeding rate is 2 L/min, the temperature at the spray inlet is 175 °C, and the temperature at the outlet is 70 °C, to give a precursor of the lithium iron phosphate composite material.
8) In an atmosphere of Ar/H₂ (volume ratio of 90:10), the above precursor of the lithium iron phosphate composite material is placed into a tubular furnace, heated from 20 °C to 800 °C at a heating rate of 5 °C/min, and kept at the same temperature for 12 h. After being naturally cooled down, the lithium iron phosphate composite material of the present invention is obtained, the tap density of which is measured to be 1.7-1.8 g/cm³.

Battery assembly and performance test: the active material, acetylene black and polyvinylidene fluoride (PVDF) were taken in a ratio of 84:8:8, homogeneously mixed, and then coated on an aluminum foil to prepare a positive electrode plate; metallic lithium is used as a negative electrode; a polypropylene film is used as a separator; and a mixed solution of 1 mol/L of LiPF₆ in ethylene carbonate (EC) and dimethyl carbonate (DMC) (volume ratio of 1:1) is used as an electrolyte; a button cell is assembled in sequence in a glove box under an argon atmosphere and a moisture content of less than 1.0 ppm, and allowed to stand for 12 hours before testing.

Protocol of Battery charge/discharge: in charging, the charge/discharge current is set according to the specific capacity of the battery and the charge/discharge rate; constant-current charge and discharge are carried out; when the battery voltage reaches 4.2 V, the system is allowed to rest for 10 minutes; in the present Example, the charging current is 0.2 C and the discharging current is 1 C; in discharging, when the battery voltage decreases to 2.4 V, the circuit automatically terminates the discharge (1 C = 170 mA/g); and then the next cycle starts.

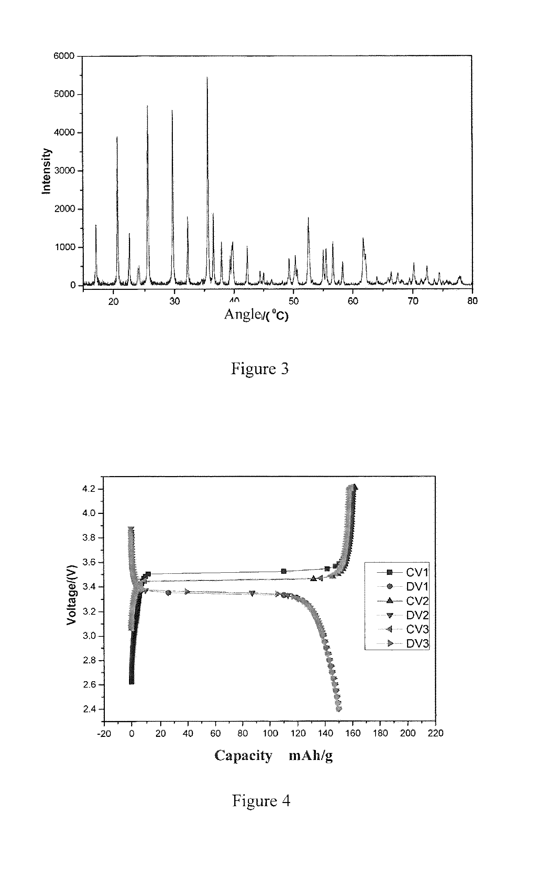

See Figure 3 and Figure 4.
Figure 3 shows a sharp diffraction peak of the sample. By comparing with the JPCPDS (40-1499) standard cards, the material is determined to have a complete and single crystalline olivine structure. The figure does not show any diffraction peak of carbon. The reason may be that the carbon content is small, or that carbon is in an amorphous state and does not affect the crystal structure.
Figure 4 shows that the discharge capacity of the material under 1 C is 150 mAh/g, which is close to the theoretical capacity, indicating that the material has a good rate performance.

### Example 2

The method for preparing a lithium iron phosphate composite material of the present invention comprises the following specific steps. 1) A solution containing ferric phosphate is prepared.

A 1 mol/L solution of ferric nitrate and an 85% solution of phosphoric acid are mixed, in a molar ratio of P to Fe of 1:1, to give the solution containing ferric phosphate.
2) 100 ml of 3 mol/L ammonia solution is prepared.
3) 8 g of aniline monomer is adding to 50 ml of deionized water to prepare an aniline solution.
4) Under stirring (500 rpm/min), the above solution containing ferric phosphate is pumped into the aniline solution with a peristaltic pump continuously and simultaneously, while controlling pH value of the reaction system at 2.0 (±0.1) with the above ammonia solution. At a temperature of 20 °C, and controlling the flow rate of the peristaltic pump at 0.45 ml/min, the reaction is carried out for 3 hours, followed by stirring for another 2 hours. The precipitate is centrifuged and washed to give ferric phosphate nanoparticles coated by aniline.
5) An aqueous system of graphene oxide is prepared.
   Graphene oxide is prepared according to an improved Hummers method (J. Am. Chem. Soc., 1958, 80(6), 1339-1339, Preparation of Graphitic Oxide). After preparation of graphene oxide, 20 g of graphene oxide is dissolved in 10 mL of water to form a 2 g/mL aqueous solution of graphene oxide which has a brown color.
6) 0.1 mol of ferric phosphate nanoparticles and 10.2 g of LiAc.2H₂O are added to deionized water and the system becomes a suspension, which is vigorously stirred until the system is mixed homogeneously. The above aqueous solution of graphene oxide is added and mixed homogeneously (wherein the content of graphene oxide is 0.5 g), wherein the solid content of ferric phosphate in water is 20%. The system is sufficiently and vigorously stirred to mix homogeneously to give a mixed solution.
7) The mixed solution of the step (is subjected to spray-drying, wherein the feeding rate is 2 L/min, the temperature at the spray inlet is 180 °C, and the temperature at the outlet is 75 °C, to give a precursor of the lithium iron phosphate composite material.
8) In a reductive atmosphere of Ar/H₂ (volume ratio of 90:10), the above precursor of the lithium iron phosphate composite material is placed into a tubular furnace, heated from 25 °C to 600 °C at a heating rate of 5 °C/min, and kept at the same temperature for 12 h. After being naturally cooled down, the lithium iron phosphate composite material of the present invention is obtained.

Described above are only preferred embodiments of the present invention, which are not intended to limit the present invention. Any modifications, equivalent substitutions and improvements made within the spirit and principle of the present invention should be included in the scope of the present invention.

## Claims

1. A lithium iron phosphate composite material, **characterized in that** the lithium iron phosphate composite has a micro-meter granular structure, the interior of the micro-meter granular structure comprises lithium iron phosphate nanocrystallines and graphene, and the exterior of the micro-meter granular structure comprises a carbon nanoparticle coating.

2. The lithium iron phosphate composite material according to Claim 1, **characterized in that** the micro-meter granular structure has a particle size in the range of 1-20 micrometers; and the lithium iron phosphate nanocrystallines have a particle size of 1-100 nanometers.

3. The lithium iron phosphate composite material according to Claim 1, **characterized in that** graphene includes molecular graphene monolayer and an aggregate of 2-100 molecular graphene monolayers.

4. A method for preparing the lithium iron phosphate composite material according to any one of Claims 1-3, comprising the steps of:
preparing a mixed solution of an iron salt wherein molar ratio of phosphor element to iron element is 1:1;
adding the mixed solution to an aqueous solution of an organic carbon source, and
mixing to react in a water bath at a temperature of 20-80 °C for 0.5-5 hours, while keeping pH of the mixed reaction system at 1-7, to give nanometer ferric phosphate coated by the organic carbon source;
adding the nanometer ferric phosphate coated by the organic carbon source and a source compound of lithium to an aqueous solution of graphene oxide, stirring to mix,
and then spray-drying to give a precursor of the lithium iron phosphate composite material, and
calcinating the precursor of the lithium iron phosphate composite material at 400-1000 °C in a reductive atmosphere for 1-24 hours, and naturally cooling down to obtain the lithium iron phosphate composite material.

5. The method for preparing the lithium iron phosphate composite material according to Claim 4, **characterized in that** the organic carbon source is at least one of thiophene monomer or a derivative thereof, aniline or derivative thereof, and pyrrole monomer or a derivative thereof.

6. The method for preparing the lithium iron phosphate composite material according to Claim 4, **characterized in that** the mass of graphene oxide is 0.1-99 % of the mass of ferric phosphate.

7. The method for preparing the lithium iron phosphate composite material according to Claim 4, **characterized in that** the conditions for spray-drying comprise: continuous stirring; feeding rate of 0.5-5 L/min, feeding temperature of 150-250 °C, and discharging temperature of 65-85 °C.

8. The method for preparing the lithium iron phosphate composite material according to Claim 4, **characterized in that**, in the calcination process, the rate of temperature increase is 2-10 °C/min; and the reductive atmosphere is a reductive atmosphere consisting of a mixture of hydrogen and argon.

9. The method for preparing the lithium iron phosphate composite material according to any one of Claims 4-8, **characterized in that**, if the iron ion in the iron salt is divalent ferrous ion, a solution of an oxidizing agent having a concentration of 0.1-5 mol/L is added to the solution when preparing the mixed solution of the iron salt.

10. Use of the lithium iron phosphate composite material according to any one of Claims 1-3 in a lithium ion battery or in a cathode material.
